# EUROPEAN PATENT SPECIFICATION

(11) **EP 0 664 959 B1**
(45) Date of publication and mention of the grant of the patent: **03.03.1999**
(21) Application number: 94200204.9
(22) Date of filing: 28.01.1994
(51) Int. Cl.: A23G 1/00, A23G 3/00

(54) **Edible fat-containing composition in a substantially solid form for use in a non-frozen aqueous environment**
Essbare Fettzusammensetzung in fester Form zum Gebrauch in Kombination mit nicht-gefrorenem wässrigem Medium
Composition contenant des graisses comestibles sous forme substantiellement solide à utiliser dans un milieu aqueuse non congelé

(43) Date of publication of application: 02.08.1995
(73) Proprietor: CAMPINA MELKUNIE B.V., NL-3447 GV Woerden (NL)
(72) Inventor: Musters-van Beusekom, Julia Theresa, NL-1276 BA Huizen (NL); van de Ven, Martinus Johannes Maria, NL-3417 SP Montfoort (NL); Tijssens, Rudy, NL-2902 KD Capelle aan de IJssel (NL)
(74) Representative: Smulders, Theodorus A.H.J., Ir.

(56) References cited:
- EP-A- 0 301 434
- EP-A- 0 388 853
- EP-A- 0 460 722
- EP-A- 0 502 697
- EP-A- 0 502 700
- EP-A- 0 564 787
- FR-A- 619 698
- FR-A- 1 604 231
- FR-A- 2 021 299
- FR-A- 2 225 096
- FR-A- 2 361 821
- US-A- 3 171 748
- US-A- 3 851 083

## Description

The invention relates to products which substantially do not soften in an aqueous environment. More particularly, the invention relates to edible constituents which can be used in a dairy product.

The problem underlying the present invention is the well-known phenomenon that, when chocolate in solid form is combined with dairy, in the course of time an interaction arises between the chocolate and the dairy product. Water, which constitutes an important constituent of many dairy products, migrates to the chocolate mass. This has as a consequence that the characteristics of chocolate change, or, more particularly, that the chocolate softens.

It is well-known to the skilled worker what is meant by "softening". Experiments have shown that chocolate with a moisture content of at least 19% is softened to a large extent. It has further been established that the designation "softening" is in any case partly related to the dimensions, and in particular the thickness, of the chocolate layer, if the chocolate composition possesses a moisture content of less than 19%. More particularly, there is a sliding scale, which, depending on the surface area of the chocolate - and therefore on the surface of interaction between chocolate and aqueous medium - runs from a solid, crisp piece of chocolate to a piece of chocolate having a softened surface but a crisp core, to a completely softened product with a soft break.

More specifically, when conventional chocolate is added to a dairy product, such chocolate is initially firm in consistency, crisp and dark in color. However, in the course of time, sometimes after one day already, the effects of the the interaction between the water present in the dairy product and the chocolate begin to become visible. After about a week the effects are quite obvious.

Initially, the outside of the chocolate becomes softer in consistency, which effect continues in the course of time towards the core of the chocolate piece. Further, when cocoa powder or cocoa mass has been incorporated into the chocolate, the color becomes lighter.

Sometimes a layered structure is observed. As regards this layered state, two aspects play a role. On the one hand, moisture enters from outside of the chocolate, so that the exterior of the chocolate piece becomes lighter in color and softer in consistency, while the layer located closer to the core of the chocolate piece remains dark in color and is hard in texture. On the other hand, upon further softening, sometimes a puff-pastrylike structure is formed, with the layers readily separating from each other. The chocolate breaks more easily.

The dairy product may discolor, so that the product no longer looks tasty. This discoloration process is explained by the fact that water-soluble constituents of the chocolate mass dissolve in the dairy product. The dissolution of these water-soluble constituents, which include cocoa constituents and sugar, also takes away the taste from the chocolate, so that a relatively tasteless product is left in the mouth.

Finally, the melting behavior of the chocolate, and hence the taste sensation, is adversily affected.

The most important disadvantage is the change of the consistency of chocolate under the influence of moisture. According as the chocolate becomes "softer", the difference in consistency with respect to the dairy product becomes smaller. The effect of a crisp piece of chocolate is lost, while moreover the chocolate no longer melts away properly in the mouth.

It will be clear that the above phenomena are dependent on the thickness and size of the pieces of chocolate incorporated into the dairy product. According as chocolate is employed in larger fragments, softening will present less noticeable disadvantages on account of the relatively small external surface with regard to the volume.

It is incidentally noted that the softening process described does not occur or occurs to a substantially lesser extent in frozen dairy, for instance ice-cream. In frozen dairy the aqueous phase is present in frozen condition, so that hardly any interaction between water and chocolate occurs, if at all. Accordingly, there are numerous consumption ice products known in which solid chocolate is used with success. Particular reference is made to various kinds of stracciatella ice-cream.

In the preparation of plain chocolate and milk chocolate, the typical starting materials are cocoa mass (cocoa butter and cocoa constituents), cocoa butter and sugar, while lecithin and vanillin are usually added. In the case of milk chocolate, in addition milk powder is added to the formulation. White chocolate is prepared by using cocoa butter alone, instead of cocoa mass, and likewise milk powder is added. As a rule chocolate has a fat content of between about 30 and 40%, although a number of chocolate compositions are known which have a somewhat lower and a somewhat higher fat content. Conventional compositions (in broad outline) of the three main types of chocolate are given in the following Table 1:

**Table 1**

| wt.% in different types of chocolate | | | |
|---|---|---|---|
| Constituent | plain | milk | white |
| cocoa butter | 36 | 30 | 26 |
| cocoa particles | 19 | 6 | -- |
| sugar | 45 | 44 | 42 |
| milk fat | -- | 6 | 8 |
| milk particles | -- | 14 | 24 |

As stated above, chocolate usually contains small amounts of lecithin, which compound functions as emulsifier, and vanillin, which serves as flavoring agent.

In broad outline, chocolate is prepared as follows. The ingredients are put together. The solid particles in the mixture obtained are comminuted, while the mass is intensively worked mechanically to form a homogeneous mass. These steps are normally carried out using rollers. Subsequently, the homogeneous mass is conched, which means that volatile, often bitter substances are displaced from the mass by a mechanical load. The purpose of conching is to improve the taste, the homogeneity and the flow properties of the chocolate. Before the mass is worked to produce the desired final form, the chocolate is usually tempered. Tempering is a special heat treatment whereby the temperature of the chocolate traverses a specified range under mechanical treatment, so that stable fat crystals are formed. Chocolate which has not been tempered exhibits a soft break and exhibits a white efflorescence upon storage. These phenomena are undesired and are looked upon as quality defects.

For the preparation of chocolate in general, reference is made to Beckett, S.T., 1988, Industrial chocolate manufacture and use; Blackie (Glasgow and London), and to Cook L.R. and Meursing E.H., 1982, Chocolate Production and Use; Harcourt Brace Jovanovich, Inc. (New York).

As stated above, the starting material in the preparation of chocolate is cocoa butter. Both for price-technical reasons and for technological reasons, cocoa butter is often replaced with other fats. Technological reasons for replacing cocoa butter with other fat - instead of cocoa mass with cocoa butter, other fat and cocoa powder are used - include:
- influencing the behavior during processing. Because cocoa butter substituents are not tempered, it is possible, during processing, more particularly during casting and molding, to keep the temperature higher, so that the viscosity of the "chocolate" is lower;
- influencing shrinkage upon solidification. Cocoa butter and cocoa butter equivalents shrink upon solidification. Cocoa butter substitutes, on the other hand, generally do not shrink or hardly do so. Shrinkage is desired for some uses, but not for others;
- influencing the melting behavior. In particular uses a different melting behavior may be desired than the specific melting behavior of chocolate.

Thus, cocoa butter equivalents are known which are characterized by a chemical composition which is identical to that of cocoa butter. These equivalents, which substantially consist of fats, can be of natural origin but may also be prepared synthetically. Such cocoa butter equivalents can be mixed with cocoa butter in all proportions without any problems. However, tempering is always necessary. Suitable cocoa butter equivalents are described in Meursing E.H., 1993, Cocoa substitutes: replacements for cocoa ingredients in chocolate, Voedingsmiddelentechnologie 26 (6), pp. 23-26; in Rossell B., 1992, Vegetable fats for chocolate, covertures and coatings, Oils & Fats Sect., Leatherhead Food Res. Ass., Leatherhead UK; and in Brinkman B., 1992, Cocoa butter alternatives, Zucker und Süsswarenwirtschaft, 45 (7/8), pp. 268-270.

In addition, there is a large group of cocoa butter substitutes. The properties of these substitutes must resemble those of cocoa butter as much as possible. Although these substitutes also consist substantially of fats, the chemical composition is often different from that of cocoa butter. Within the group of cocoa butter substitutes a distinction is made between lauric and non-lauric fats. Examples of lauric fats include coconut oil and palm kernel stearin, while soya fat belongs to the non-lauric fats. The above-mentioned substitute fats give an undesired melting behavior when mixed with cocoa butter. It is not necessary to temper chocolate-like products which have been prepared from cocoa butter substitutes - the law on foodstuffs does not allow these products to be marketed under the name of "chocolate"; they are designated by terms such as "cocoa fantasy".

For chocolate the melting behavior is of great importance. Before consumption chocolate must be solid and during consumption it must melt. If this effect does not occur, the product is not appreciated.

As stated in detail hereinabove, chocolate softens in products comprising an aqueous medium, for example in dairy products or fruit masses. Experiments have been carried out, where chocolate and cocoa fantasy of conventional formulation were introduced in thin layers into different dairy products and stored at 7°C for 1-2 weeks. The problem of softening as outlined hereinabove appears from the results of these experiments, in which (A) cocoa fantasy based on 38% hardened palm kernel fat, (B) chocolate with 37% cocoa butter and (C) chocolate with 42% cocoa butter were tested.

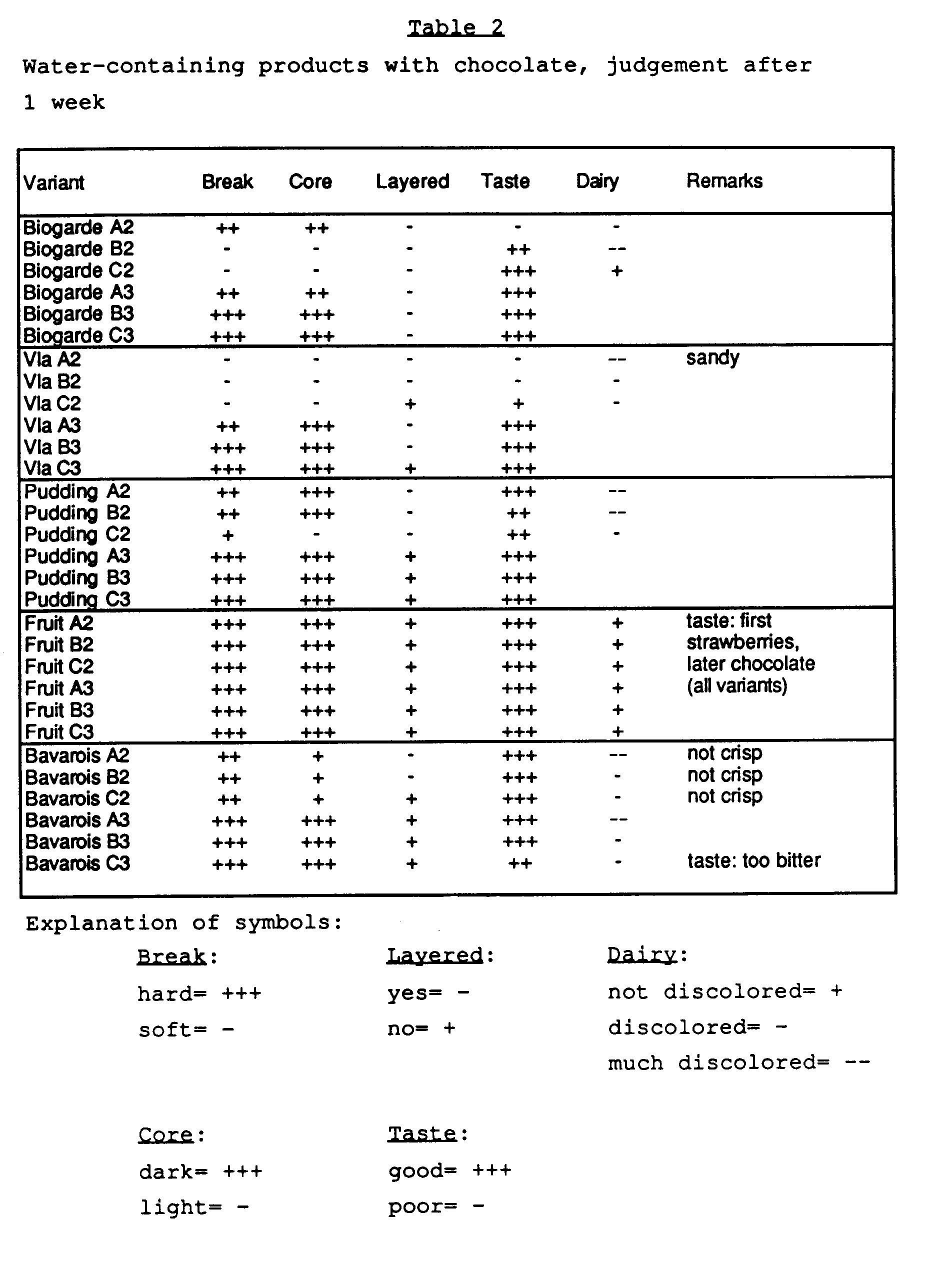

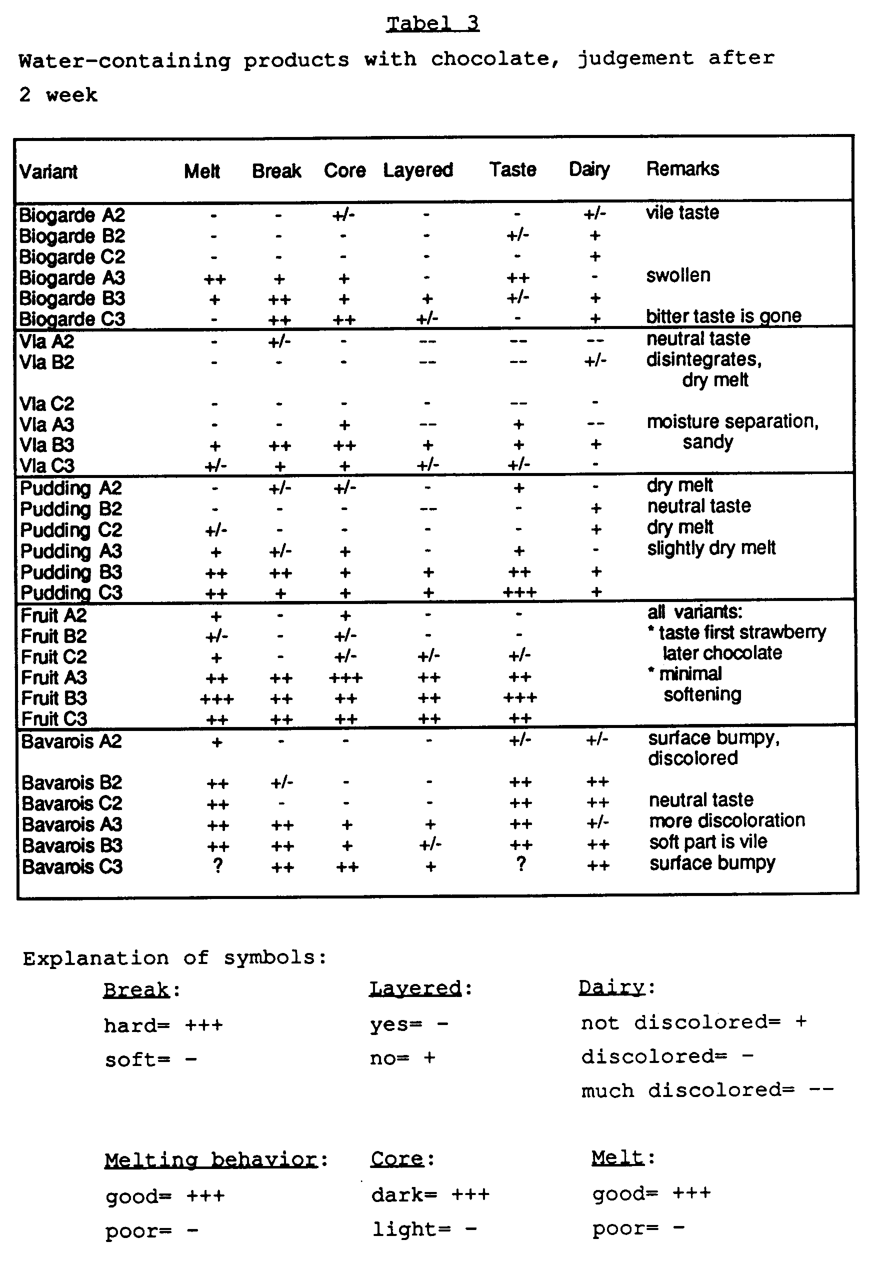

In these experiments the number following the capitals A, B and C indicates the thickness in millimeters of the layers of chocolate.

The products in which the compositions to be tested were incorporated were: MONA™ Bavarois ["Bavarian"] Cappuccino; MONA™ Biogarde Roer, 1.5% fat; MONA™ Strawberry Fruit Mass (for the preparation of whole fruit yoghurt); MONA™ Gezinspudding Vanille ["Vanilla Family Pudding"]; and Melkunie™ Vanillevla ["Vanilla Custard"].

The designation "hard break" refers to a piece of chocolate or cocoa fantasy that breaks crisply, either in the mouth or by the impact of a spoon or the like. When a flake of chocolate or cocoa fantasy is not hard and as a consequence does not break crisply, the qualification "soft break" is used. In this connection it is noted that the above-mentioned tempering step renders the break of conventional chocolate harder.

The column "core" includes statements about the interior of the pieces of chocolate or cocoa fantasy, which is not in direct contact with the dairy environment.

There are some dairy products on the market in which pieces of chocolate are incorporated. Examples include:
- Chocolate Mousse with chocolate pieces (CWS private label), produced by TMC Dairy Products Monaghan, Ireland, which product is keepable for about 23 days; and
- MONA Luxury Chocolate Mousse, produced by TMC Dairy Products Monaghan, Ireland, which product is keepable for about 23 days.

These products contain conventional chocolate with a fat percentage of about 25.2 wt.%. In these dairy products the chocolate has become entirely soft by the end of the keepability term.

The object of the present invention is to provide edible, fat-containing chocolate or cocoa fantasy compositions which can be used in non-frozen water-containing environments without essentially softening.

Surprisingly, it has now been found that the problem of softening does not occur when chocolate or cocoa fantasy compositions comprising 70-90 wt.% fat are used in aqueous environments wherein the fat phase of the composition consists of cocoa butter or a cocoa butter replacing fatty composition. Such products comprising a composition with a fat content of 70-90 wt.% maintain their desired (taste) characteristics for no less than 3 weeks, and as a rule longer than 5 weeks.

More specifically, it was found for chocolate compositions that compositions having a cocoa butter content of more than 70%, and preferably more than 80%, and less than or equal to 90% do not soften in an aqueous medium, such as in dairy, while yet the intended characteristics of chocolate are obtained. This is quite surprising and unexpected, because consumption chocolate with so high a fat content is unacceptable in terms of break and "bite" and therefore cannot be sold. What is more, when a conventional chocolate product is not tempered, this product does not possess the properties desired for chocolate. In particular, non-tempered conventional chocolate is too soft, it melts too quickly and exhibits a white efflorescence upon storage, in contrast with the compositions according to the present invention, which are stored and consumed at a lower temperature. In a preferred embodiment of the compositions according to the invention, the compositions are not tempered.

The invention accordingly relates to an edible fat-containing chocolate or cocoa fantasy composition comprising 70-90 wt.% fat, preferably more than 75 wt.% and most preferably at least 80 wt.% fat wherein the fat phase of the composition consists of cocoa butter or a cocoa butter replacing fatty composition, which has a substantially solid form in an aqueous medium, in which medium the aqueous phase is not frozen,

Such compositions comprising 70-90 wt.% of said fat phase may further comprise non-fat adjuvants, for instance aromatic, coloring and flavoring substances. Further, fillers can be used, or substances essential to the body, such as (fat-soluble) vitamins. These adjuvants, body, such as (fat-soluble) vitamins. These adjuvants, whether or not in combination, can be used in an amount of up to of up to 30 wt.%. Suitable adjuvants are sugar, cocoa, lecithin, vanillin, sugar-replacing ingredients, taste enhancers, etc.

Preferably, the compositions according to the invention are used in an aqueous environment formed by a dairy product or a fruit mass. In particular, the compositions according to the invention can be used as a substantially solid constituent in liquid products such as yoghurt, custard, etc., but also in more solid products, such as bavarois, etc.

When the compositions according to the invention are used in dairy products, desserts with substantially solid constituents are formed, which constituents, after 5 weeks, as a rule exhibit substantially no softening or otherwise undesired defects in taste sensation.

Percentages in the description are always percentages by weight, unless stated otherwise.

The fat phase of the composition according to the invention consists of cocoa butter or of a cocoa butter-replacing fat composition. The compositions according to this preferred embodiment are suitable for use as a "chocolate" in desserts. It is of importance that these compositions, when incorporated in a dairy product, which is typically stored cool, are solid or in any case possess only a slight liquid component, and melt in the mouth.

Thus, cocoa fantasy can be prepared from both lauric and non-lauric fats, which does not give any problems in combination with dairy products, provided the fat content of this product is above, and preferably well over 70%. However, it is difficult to obtain a good melting behavior of such chocolate replacements for products which are consumed at a temperature of about 7°C.

Highly preferred are compositions substantially comprising 80-90 wt.% cocoa butter, the balance sugar and cocoa particles. The proportions of sugar and cocoa to cocoa butter are dependent on the desired taste. Excellent results are obtained with compositions comprising about 85% cocoa butter, 10% cocoa particles and 5% sugar. Sugar can also be replaced by a strong sweetener. Such products, either in non-tempered form or tempered but in small pieces, possess in particular an excellent melting behavior, and the desired break and bite. It is stressed once again that the fat compositions according to the invention, which are present as chocolate in a water-containing product, need not be tempered to exhibit a good melting behavior. In fact, such compositions, unless present in a form with a relatively large outer surface in proportion to the volume, possess a less good melting behavior if they are tempered.

As stated, tempering is substantially unnecessary in the specific use of the chocolate compositions according to the invention. One of the most important consequences of a tempering step is the provision of stable fat crystals, so that chocolate does not exhibit any white efflorescence, for instance. Any defect as a result of non-stable fat crystals does not visibly occur during storage of the compositions according to the invention in an aqueous environment. It has further been found that, because the temperature during consumption of the intended dairy products, to which the compositions according to the invention have been added, is low, the break is hard enough, and the product melts away properly in the mouth. A disadvantage of carrying out a tempering step is that simultaneously with the hardening of the break, the melt becomes slower. A slower melt gives a less good mouthfeel and the taste is only released late. Such slow melting away can be obviated by taking account of the form and size of the pieces or layers of chocolate or chocolate fantasy. In fact, the slower the melt, the larger the surface area of the piece or layer with respect to the volume must be to obtain a desired mouthfeel.

The fat compositions according to the invention can be used in any desired form. Thus the composition according to the invention, whether tempered or not, can be present in the form of crisp, solid fragments or of a thin layer. Because of the slightly slower melting behavior, due to tempering, upon consumption of a dairy product at a low temperature, it is desired to form small pieces or a thin layer. Highly suitable are layers of the composition having a thickness of about 1 mm and a diameter of from 60-80 mm or pieces having a thickness of from 1-2 mm and an average diameter of 5 mm. Incidentally, depending on the intended use and the ingredients of the composition, it is easy for a skilled worker to determine suitable dimensions for substantially solid constituents for dairy products, for instance. When the composition is not tempered, it can be processed in liquid form to produce a layer or a bit. Untempered layers or bits may be thicker because of the property that such compositions melt away more quickly during consumption.

In addition, the compositions according to the invention can be used in the form of a coating for solid constituents which, when in contact with the aqueous medium, lose their character or for liquid constituents which are only to be released upon consumption. This use makes it possible to maintain dry and/or crisp constituents, for instance pieces of cake, as such in an aqueous medium. It is also possible to use the composition according to the invention for an "aroma-release". Such coated constituents are released when the fat-containing composition melts and/or when the layer of fat is broken mechanically, by the teeth or by a spoon or the like. The coating compositions may be neutral in taste as well as flavorful.

The compositions according to the invention can be prepared in simple manner. The ingredients of the compositions can be mixed, if necessary rolled and conched until a homogeneous product is obtained. Then the product can be brought into a desired form. When the product is processed to form pieces, whether or not in a desired form, it can be metered in liquid form and solidify upon cooling. This can also take place by mixing the composition into the aqueous medium during solidification. As a layer, it may for instance be poured directly onto the aqueous medium or over a product to be coated or be sprayed over it. A layer may serve both as intermediate layer and as a coating.

If the starting material is cocoa butter, it is put together with the other ingredients, for instance cocoa particles and sugar, and rolled and conched in the manner conventional in chocolate making. It is also possible to start from a so-called cocoa mass, which consists of a combination of cocoa butter and cocoa particles. Cocoa mass comprises about 55% fat. The mixture obtained can subsequently be molded, optionally after tempering.

Further, the invention relates to the use of a chocolate or cocoa fatty composition comprising 70-90 wt.% fat, wherein the fat phase of the composition consists of cocoa butter or of a cocoa butter-replacing fatty composition, which composition has a substantially solid form in an aqueous medium, for instance a dairy product or a fruit mass, in which medium the aqueous phase is not frozen, as a non-softening solid constituent.

Finally, the invention relates to a water-containing, non-frozen foodstuff wherein a composition as defined in claim 1 is present as a solid bit.

The invention is further elaborated in and by the following examples. The percentages are always percentages by weight based on the total composition, unless stated otherwise.

### Example 1

Chocolate was prepared in the conventional manner on the basis of cocoa mass, cocoa butter and sugar, which ingredients were used in the amounts specified in Table 4 below. Slices of a thickness of 1 mm and an average diameter of about 60 mm were formed. The slices obtained were tempered or not and contacted with an airy pudding (MONA™ Bavarois Cappuccino). After two weeks' storage at 7°C the moisture content of the chocolate slices was determined and the chocolate was judged sensorially. The moisture content was determined by the sand method. This method is described in "REGULATIONS for chemical, physical and microbiological research in the dairy industry", a publication of the Koninklijke Nederlandse Zuivelbond FNZ (Royal Dutch Dairy Association).

**Table 4**

| Formulation in % | | | Tempered yes (+) or no (-) | Moisture % | Judgement of chocolate |
|---|---|---|---|---|---|
| Fat | cocoa | sugar | | | |
| 55 | 15 | 30 | - | 16 | weakened surface, melts quickly |
| 55 | 15 | 30 | + | 16 | weakened surface, melts slowly |
| 85 | - | 15 | - | 4 | crisp, melts quickly |
| 85 | 5 | 10 | - | 5 | crisp, melts quickly |
| 85 | 5 | 10 | + | 7 | crisp, melts slowly |
| 85 | 10 | 5 | - | 5 | crisp, melts quickly |
| 85 | 15 | - | - | 3 | crisp, melts quickly |

The amount of moisture taken up, and, in conjunction therewith, the extent of softening of the chocolate appeared to show a clear correlation with the fat content of the chocolate. Further, the melting behavior was found to depend on whether or not the chocolate was tempered.

### Example 2

Fat mixtures comprising different kinds of fat and different percentages of fat were prepared. The compositions of these mixtures are specified in Table 5.

**Table 5**

| Composition | type of fat | % fat | % sugar | % cocoa |
|---|---|---|---|---|
| 1 | cocoa butter | 55 | 30 | 15 |
| 2 | cocoa butter | 70 | 20 | 10 |
| 3 | cocoa butter | 85 | 10 | 5 |
| 4a | hardened coconut oil | 55 | 30 | 15 |
| 4b | hardened palm kernel stearin | 55 | 30 | 15 |
| 5 | hardened palm kernel stearin | 70 | 20 | 10 |
| 6 | hardened palm kernel stearin | 85 | 10 | 5 |
| 7a | 34% palm kernel + 66% coconut | 55 | 30 | 15 |
| 7b | 34% coconut + 66% palm kernel | 55 | 30 | 15 |
| 8 | 34% coconut + 66% palm kernel | 70 | 20 | 10 |
| 9 | 34% coconut + 66% palm kernel | 85 | 10 | 5 |
| 10 | non-lauric fat | 55 | 30 | 15 |
| 11 | non-lauric fat | 70 | 20 | 10 |
| 12 | non-lauric fat | 85 | 10 | 5 |

The hardened palm kernel stearin was obtainable under type number CLSP 555 of Loders Croklaan; the hardened coconut oil was Refined Hardened Coconut 33 of Cargill; the non-lauric fat was Croklaan Special 710 of Loders Croklaan.

The products with cocoa butter were prepared with cocoa mass. The variants with other fats contained non-alkalized cocoa powder.

The compositions 1-3 with cocoa butter were not tempered and applied in liquid form to dairy products with a spoon. At the time of application the temperature of the chocolate was about 45°C. The fats were tested in combination with 'bavarois' (judgement temperature 20°C) and with 'vla' and Biogarde® (judgement temperature 7°C). After application the fat was allowed to solidify, whereafter the chocolate was covered with dairy.

The fat composition of variant 4a dit not shrink upon solidification. This composition was supplied in liquid form onto the dairy products in suitable amounts.

Variants 4b-12 were charged in suitable amounts to dishes of a diameter of 65 mm. Then cooling took place in a cooling tunnel. The slices formed were removed from the dishes and, together with bavarois charged to containers in suitable amounts.

The products were stored at 7°C and judged after 2, 9 and 16 days. The results are specified in Table 6.

**Table 6**

| Overview of the results of the judgement of different kinds of chocolate in dairy | | | |
|---|---|---|---|
| Composition | Judgement after 2 days | Judgement after 9 days | Judgement after 16 days |
| 1 | acceptably crisp | somewhat soft | softened, in biogarde: discoloration B. |
| 2 | crisp | somewhat soft | slightly softened surface |
| 3 | crisp | crisp | not softened |
| 4a | good, melts well | reasonably crisp, melts well | surface softened, otherwise reasonable break and good melt |
| 4b | melts away too slowly | crisp, melts less quickly than 1-3 | softened |
| 5 | melts away too slowly | crisp, melts away too slowly | somewhat layered |
| 6 | melts away too slowly | crisp, melts away too slowly | not softened |
| 7a | soft, melts away too slowly | good break, somewhat soft in the mouth | somewhat softened layer |
| 7b | crisper, late release of taste | good break, melts away too slowly | somewhat softened layer |
| 8 | harder, melts away too slowly | melts away too slowly | not softened, melts away slowly |
| 9 | harder, melts away too slowly | melts away too slowly | not softened melts away too slowly |
| 10 | soft, melts away much too slowly | soft, melts away much too slowly | layered, softened |
| 11 | soft, melts away much too slowly | soft, melts away much too slowly | somewhat layered |
| 12 | soft, melt away much too slowly | soft, melts away much too slowly | good crispiness |

Table 6 clearly shows that quality deterioration of chocolate and cocoa fantasy in combination with dairy products clearly depends on the percentage of fat in the fatty composition. The fatty compositions comprising 55% fat exhibited softening, which increased in the course of time. Fatty compositions comprising 85% fat were still crisp in consistency after 16 days. The texture did not show any differences from that of a comparative composition which was not combined with dairy but was stored under the same conditions for the same period of time.

The melting behavior of the fats was different. In particular the non-lauric fats and, to a lesser extent, the lauric fats melted away very slowly. As regards melting behavior, cocoa butter is preferred.

### Example 3

Fat mixtures with increasing fat contents were prepared: 60, 65, 70, 75, 80 and 85% fat. Table 7 gives the compositions of these fat mixtures.

**Table 7**

| Composition chocolate | | |
|---|---|---|
| % cocoa butter | % cocoa powder | % sugar |
| 85 | 10 | 5 |
| 80 | 13.3 | 6.7 |
| 75 | 16.7 | 8.3 |
| 70 | 20 | 10 |
| 65 | 23.3 | 11.7 |
| 60 | 26.7 | 13.3 |

All compositions were tested in untempered form and the composition comprising 85% cocoa butter was also tested in tempered form.

Further, a chocolate was prepared comprising 60% fat and 1% lecithin and 12.3% sugar, in order to investigate the influence of lecithin on softening. Lecithin is an emulsifier and is usually added during the preparation of chocolate to lower the viscosity during processing.

Each fat formulation was poured into 200 ml cups in an amount of 12 g per cup. The cups were placed in a refrigeration cell to allow the fat composition to solidify. Thus slices of a thickness of 2.2-2.4 mm were obtained.

The slices were charged to containers along with Biogarde® and with bavarois cappuccino in suitable amounts. The dairy products were preserved and stored at 2°C.

Judgement took place after 1, 2, 3, 4 and 5 weeks. During judgement it was established as well as possible to what extent the chocolate had softened. Break, melt and discoloration of the dairy were taken into account. The moisture content was determined by the sand method after 1, 2, 3, 4 and 5 weeks' storage. For the determination, the slices of chocolate were removed from the dairy product and carefully wiped with a tissue.

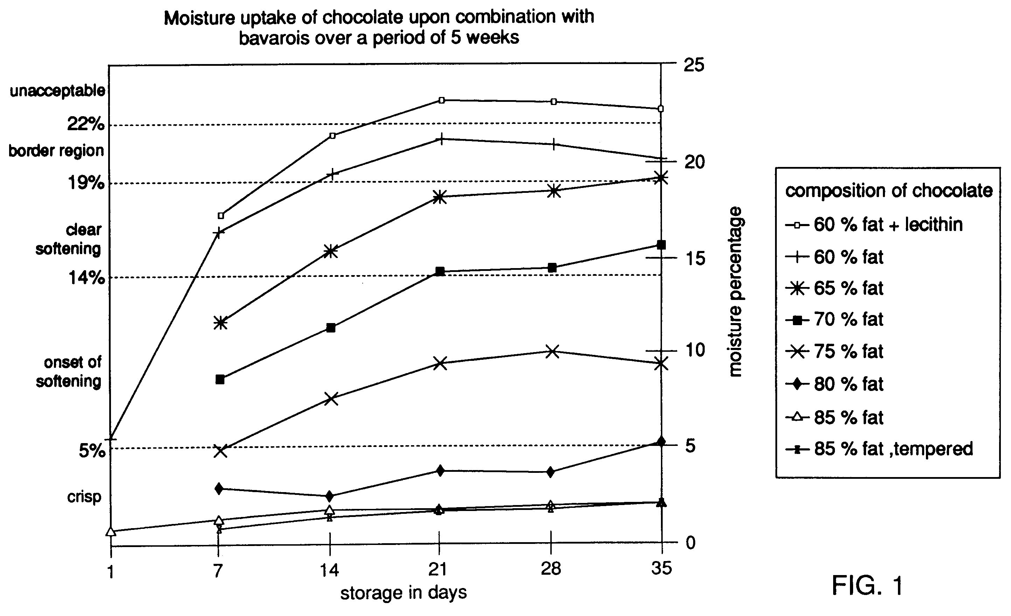

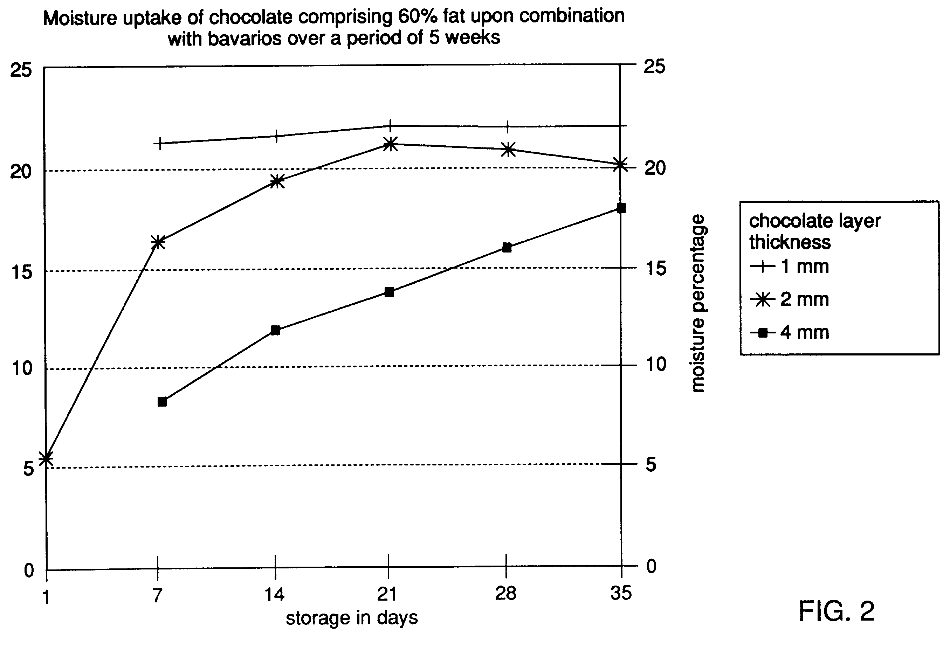

The results of the analyses of the moisture percentages are specified in Tables 8 and 9. Further, Figs. 1 and 2 graphically represent the results for chocolate in bavarois.

The chocolate in the dairy compositions was also judged organoleptically and in terms of appearance. In Tables 8 and 9 the subscripts 1, 2 and 3 indicate the extent of softening.

The tempered chocolate having a fat content of 85% melted away very slowly, which gave an undesired mouthfeel. On the other hand, this chocolate took up less moisture.

**Table 8**

| Analyses of moisture percentages in chocolate | | | | | | |
|---|---|---|---|---|---|---|
| Chocolate no.: fat % | percentage of moisture after combination with bavarois cappuccino | | | | | |
| particulars | 1 day | 1 week | 2 weeks | 3 weeks | 4 weeks | 5 weeks |
| 0: 85, tempered | | 0.85 | 1.35 | 1.65 | 1.84 | 2.25 |
| 1: 85 | 0.7 | 1.24 | 1.73 | 1..82 | 2.02 | 2.22 |
| 2: 80 | | 2.85 | 2.42 | 3.78 | 3.65 | ₁5.18 |
| 3: 75 | | 4.80 | ₁7.52 | ₁9.35 | ₁10.0 | ₁9.42 |
| 4: 70 | | 8.57 | ₁11.2 | ₁14.2 | ₂14.4 | ₂15.7 |
| 5: 65 | | ₁11.5 | ₂15.3 | ₂18.2 | ₂18.5 | ₂19.2 |
| 6: 60 | 5.5 | ₂16.4 | ₂19.3 | ₂21.2 | ₂20.9 | ₂20.1 |
| 7: 60, lecithin | | ₃17.2 | ₃21.3 | ₃23.2 | ₃23.0 | ₃22.8 |
| 8: 60, thinner | | ₂21.3 | ₂21.6 | ₂22.1 | ₂22.0 | ₂22.1 |
| 9: 60, thicker | | 8.28 | 11.9 | ₁13.9 | ₁16.2 | ₂18.3 |
| The subscripts have the following meaning: | | | | | | |

| | | | | | | |
|---|---|---|---|---|---|---|
| 1: softening visible, core still hard but outer layers softer, acceptable | | | | | | |
| 2: softening highly visible, two layers with moisture in between, only just acceptable | | | | | | |
| 3: soft break, unacceptably softened | | | | | | |

**Table 9**

| Chocolate no.: fat % | percentage of moisture after combination with biogarde | | | | | |
|---|---|---|---|---|---|---|
| particulars | 1 day | 1 week | 2 weeks | 3 weeks | 4 weeks | 5 weeks |
| 1: 85 | 0.6 | | | 2.52 | 4.87 | ₁ |
| 2: 80 | | | | 6.88 | ₁ | ₁8.62 |
| 3: 75 | | ₁ | ₁ | ₁11.4 | ₂ | ₂ |
| 4: 70 | | ₂ | ₂ | ₂18.3 | ₂ | ₂20.7 |
| 5: 65 | | ₂ | ₂15.7 | ₃22.5 | ₃ | ₃ |
| 6: 60 | | ₂16.5 | ₂ | ₃26.3 | ₃ | ₃ |
| The subscripts have the following meaning: | | | | | | |

| | | | | | | |
|---|---|---|---|---|---|---|
| 1: softening visible, core still hard but outer layers softer, acceptable | | | | | | |
| 2: softening highly visible, two layers with moisture in between, biogarde brown discoloration | | | | | | |
| 3: soft break, unacceptably softened, biogarde brown discoloration | | | | | | |

As appears from Tables 8 and 9 and Figs. 1 and 2, the softening of chocolate clearly depends on the percentage of fat and the storage time. Figs. 1 and 2 indicate ranges with a qualitative note on the extent of softening. More generally, it can be said that chocolate with a moisture content lower than 5% had an excellent consistency. Chocolate comprising between 5 and 14% moisture exhibited a slightly softened surface but possessed the desired properties. Chocolate comprising a moisture content between 14 and 19% clearly exhibited softening. This chocolate was clearly softer and clearly showed two layers between which moisture had accumulated. Chocolate comprising 19-22% moisture was so soft that the boundary between 'acceptable and unacceptable' was reached. Chocolate comprising in excess of 22% moisture was unacceptably soft in consistency.

The test results show that chocolate in biogarde took up more moisture than the chocolate in bavarois. Further, biogarde discolored in a number of cases.

## Claims

1. An edible, fat-containing chocolate or cocoa fantasy composition comprising 70-90 wt.% fat, wherein the fat phase of the composition consists of cocoa butter or of a cocoa butter-replacing fatty composition which composition has a substantially solid form in an aqueous medium, in which medium the aqueous phase is not frozen.

2. A composition according to claim 1, which composition comprises at least 80 wt.% fat.

3. A composition according to claim 1 or 2, wherein the aqueous medium is a dairy product.

4. A composition according to claim 1 or 2, wherein the aqueous medium is a fruit mass.

5. A composition according to any one of the preceding claims, substantially consisting of 80-90 wt.% cocoa butter, the balance sugar and cocoa particles.

6. A composition according to any one of the preceding claims, which is non-tempered.

7. A composition according to any one of the preceding claims, which composition is present in the form of crisp, solid fragments or of a thin layer.

8. A composition according to any one of claims 1-6, which composition is present in the form of a coating for solid constituents which, in contact with the aqueous medium, lose their character or for liquid constituents which are only to be released upon consumption.

9. Use of a chocolate or cocoa fantasy composition as defined in claim 1 in an aqueous medium, preferably a dairy product or fruit mass, in which medium the aqueous phase is not frozen, as a non-softening solid constituent.

10. Water-containing, non-frozen foodstuff wherein a composition according to any one of claims 1-8 is present as a solid bit.

11. A foodstuff according to claim 10, wherein the composition is present as a coating around a solid constituent which, in contact with the aqueous medium, loses its character.

## Patentansprüche

1. Eßbare, fetthaltige, kakaoartige oder Schokoladen-Zusammenseztung, die 70-90 Gew.% Fett enthält, wobei die fettige Phase der Zusammensetzung aus Kakobutter oder einem Kakaobutterfettersatz besteht, und wobei die Zusammenseztung eine in wesentlichen feste Form in einem wässrigen Medium besitzt, in welchem die wässrige Phase nicht gefroren ist.

2. Zusammensetzung nach Anspruch 1, die wenigstens 80 Gew.% Fett enthält.

3. Zusammensetzung nach Anspruch 1 oder 2, in der das wässrige Medium ein Milchprodukt ist.

4. Zusammensetzung nach Anspruch 1 oder 2, in welcher das wässrige Medium eine Fruchtmasse ist.

5. Zusammensetzung nach einem der vorstehenden Ansprüche, im wesentlichen enthaltend 80-90 Gew.% Kakaobutter und im übrigen Zucker und Kakaopartikel.

6. Zusammensetzung nach einem der vorstehenden Ansprüche, welche nicht nacherhitzt (getempert) ist.

7. Zusammensetzung nach einem der vorstehenden Ansprüche, die in der Form von Kräuseln, Feststofffragmenten oder einer dünnen Schicht vorliegt.

8. Zusammensetzung nach einem der Ansprüche 1 bis 6, die in der Form einer Beschichtung für feste Bestandteile vorliegt, die im Kontakt mit dem wässrigen Medium ihre besondere Eigenschaft verlieren, oder für flüssige Bestandteile, die nur bei Verbrauch freigesetzt werden sollen.

9. Verwendung einer kakaoartigen oder Schokoladen-Zusammensetzung nach Anspruch 1 in einem wässrigen Medium, vorzugsweise einem Milchprodukt oder Fruchtmasse, in welchem die wässrige Phase nicht gefroren ist, als nicht erweichender fester Bestandteil.

10. Wasserenthaltendes, nicht gefrorenes Nahrungsmittel, in welchem eine Zusammensetzung nach einem der Ansprüche 1 bis 8 in fester Form vorliegt.

11. Nahrungsmittel nach Anspruch 10, in welchem die Zusammensetzung als eine Beschichtung um einen festen Bestandteil vorliegt, der im Kontakt mit dem wässrigen Medium seine besondere Eigenschaft verliert.

## Revendications

1. Composition comestible de chocolat ou de fantaisie au cacao, contenant des matières grasses, laquelle composition comprenant 70 à 90% en poids de matières grasses, où la phase des matières grasses de la composition consiste en du beurre de cacao ou en une composition des matières grasses remplaçant le beurre de cacao, laquelle composition a une forme essentiellement solide dans un milieu aqueux, milieu dans lequel la phase aqueuse n'est pas congelée.

2. Composition selon la revendication 1, laquelle composition comprend au moins 80% en poids de matières grasses.

3. Composition selon la revendication 1 ou 2, où le milieu aqueux est un produit laitier.

4. Composition selon la revendication 1 ou 2, dans laquelle le milieu aqueux est une masse de fruits.

5. Composition selon l'une quelconque des revendications précédentes, consistant essentiellement en 80 à 90% en poids de beurre de cacao, le reste étant du sucre et des particules de cacao.

6. Composition selon l'une quelconque des revendications précédentes, qui est non-tempérée.

7. Composition selon l'une quelconque des revendications précédentes, laquelle composition est présente sous la forme de fragments solides croquants ou d'une fine couche.

8. Composition selon l'une quelconque des revendications 1 à 6, laquelle composition est présente sous la forme d'un revêtement pour des constituants solides qui, au contact avec le milieu aqueux, perdent leur caractère ou pour des constituants liquides qui doivent être libérés seulement lors de la consommation.

9. Utilisation d'une composition de chocolat ou de fantaisie du cacao selon la revendication 1 dans un milieu aqueux, de préférence un produit laitier ou une masse de fruits, milieu dans lequel la phase aqueuse n'est pas congelée, en tant que constituant solide non-ramollissant.

10. Produit alimentaire non congelé, contenant de l'eau dans lequel une composition selon l'une quelconque des revendications 1 à 8 est présente en tant que morceau solide.

11. Produit alimentaire selon la revendication 10, dans lequel la composition est présente sous la forme d'un revêtement autour d'un constituant solide qui, au contact avec le milieu aqueux, perd son caractère.
